(19) Europäisches Patentamt

European Patent Office

Office européen des brevets

(11) **EP 1 018 221 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(21) Anmeldenummer: **98941344.8**

(22) Anmeldetag: **16.07.1998**

(51) Int Cl.⁷: **H04J 11/00**, H04B 1/00

(86) Internationale Anmeldenummer:
**PCT/EP98/04434**

(87) Internationale Veröffentlichungsnummer:
**WO 99/009656 (25.02.1999 Gazette 1999/08)**

(54) **VERFAHREN UND SCHALTUNGSANORDNUNG ZUR ÜBERTRAGUNG VON NACHRICHTEN MITTELS NÄHERUNGEN VON HERMITESCHEN FUNKTIONEN**

METHOD AND CIRCUIT FOR THE TRANSMISSION OF MESSAGES USING APPROXIMATED HERMITE FUNCTIONS

PROCEDE ET CIRCUIT POUR LA TRANSMISSION DE MESSAGES EN UTILISANT DES APPROXIMATIONS DE FONCTIONS HERMITIENNES

(84) Benannte Vertragsstaaten:
**AT BE CH CY DE DK ES FI FR GB GR IE IT LI LU MC NL PT SE**

(30) Priorität: **13.08.1997 DE 19735097**

(43) Veröffentlichungstag der Anmeldung:
**12.07.2000 Patentblatt 2000/28**

(73) Patentinhaber: **Deutsche Telekom AG 53113 Bonn (DE)**

(72) Erfinder:
• **HUBER, Klaus**
  **D-64283 Darmstadt (DE)**
• **HOFMANN, Karl-Heinrich**
  **D-64287 Darmstadt (DE)**

(56) Entgegenhaltungen:
**EP-A- 0 340 853          US-A- 5 761 346**

• **HADDAD R A ET AL: "A new orthogonal transform for signal coding" IEEE TRANSACTIONS ON ACOUSTICS, SPEECH AND SIGNAL PROCESSING, SEPT. 1988, Bd. 36, Nr. 9, Seiten 1404-1411, XP002094402 ISSN 0096-3518, IEEE, New York, USA**

EP 1 018 221 B1

**Beschreibung**

Die Erfindung betrifft ein Verfahren zur Übertragung von Nachrichten, wobei die Nachrichten mittels orthogonaler Funktionen zu einem Signal kodiert werden. Die Erfindung betrifft darüber hinaus eine Schaltungsanordnung zur Ausübung des Verfahrens.

Verfahren dieser Art sind aus dem Stand der Technik bekannt. So werden in der Praxis häufig Sinus- und Cosinusfunktionen als orthogonale Basisfunktionen zur Kodierung einer Anzahl von Nachrichten zu einem gemeinsamen Signal benutzt. Zur Theorie dieser Verfahren wird auf das Buch "Principles of Communication Engineering", Wozencraft, Jacobs, Wiley New York 1965, verwiesen.

Ein Verfahren und eine Vorrichtung nach den Oberbegriffen der unabhängigen Ansprüche, die als orthogonale Funktionen die hermiteschen Funktionen einsetzen, sind aus EP 0 340 853 bekannt.

Bei der Übertragung von Nachrichten ist man bestrebt, die zu übertragenden Signale störunempfindlich zu machen und empfängerseitig Mittel vorzusehen, die Störungen ausfiltern.

Die Aufgabe der vorliegenden Erfindung besteht darin, ein Verfahren beziehungsweise eine Schaltunsanordnung anzugeben, die eine hohe Übertragungsrate bei einer Reduktion der Störungsempfindlichkeit ermöglichen.

Diese Aufgabe wird zum einen durch ein Verfahren gelöst, daß die Merkmale des Anspruchs 1 aufweist. Hierbei wird die Eigenschaft ausgenutzt, daß sich Hermitesche Funktionen bei einer Fouriertransformation bis auf eine multiplikative Konstante nicht verändern.

In einer vorteilhaften Weiterbildung der Erfindung wird das empfangene Signal vor und/oder nach der Fouriertransformation gefiltert, um eventuell enthaltene Störanteile zu beseitigen.

In einer vorteilhaften Weiterbildung der Erfindung wird das empfangene Signal sowohl im Zeitbereich als auch im Frequenzbereich dekodiert. Das heißt, daß das empfangene Signal einerseits direkt der Dekodierung zugeführt wird und andererseits zunächst fouriertransformiert und dann dekodiert wird.

In einer vorteilhaften Weiterbildung der Erfindung wird jeweils eines der beiden im Zeit- beziehungsweise im Frequenzbereich liegenden dekodierten Signale ausgewählt.

In einer vorteilhaften Weiterbildung der Erfindung wird eines der beiden im Zeitbereich und im Frequenzbereich vorliegenden Signale auf der Grundlage aller vorliegenden Signale ausgewählt.

Die Aufgabe der Erfindung wird zum anderen von einer Schaltungsanordnung gelöst, die die Merkmale des Anspruchs 8 aufweist.

In einer vorteilhaften Weiterbildung der Erfindung weist die Demodulationseinrichtung eine der Anzahl der Dimensionen beziehungsweise Linearfaktoren entsprechende Anzahl von Multiplizierern, Integratoren und Entscheidern auf, wobei jeweils ein Multiplizierer, ein Integrator und ein Entscheider zu einer Auswerteeinheit in Reihe geschaltet sind. Multiplizierer und Integrator bilden einen Korrelator.

In einer vorteilhaften Weiterbildung der Erfindung ist jede Auswerteeinheit zweifach vorgesehen, wobei jeweils eine der beiden Auswerteeinheiten das Signal im Zeitbereich und die andere Auswerteeinheit das Signal im Frequenzbereich zugeführt bekommt. Statt zwei Auswerteeinheiten kann gegebenenfalls nur eine in Multiplextechnik benutzt werden.

Die Erfindung wird nun anhand von Ausführungsbeispielen mit Bezug auf die Zeichnung näher erläutert. Dabei zeigen:

Figur 1      eine schematische Darstellung eines ersten Ausführungsbeispiels einer Schaltungsanordnung,

Figur 2      eine schematische Darstellung der Empfän gerseite eines weiteren Ausführungsbeispiels,

Figur 3      eine schematische Darstellung der Emp fängerseite eines weiteren Ausführungsbeispiels,

Figur 4      eine schematische Darstellung der Empfängerseite eines weiteren Ausführungsbeispiels, und

Figur 5      eine graphische Darstellung der ersten fünf hermiteschen Funktionen.

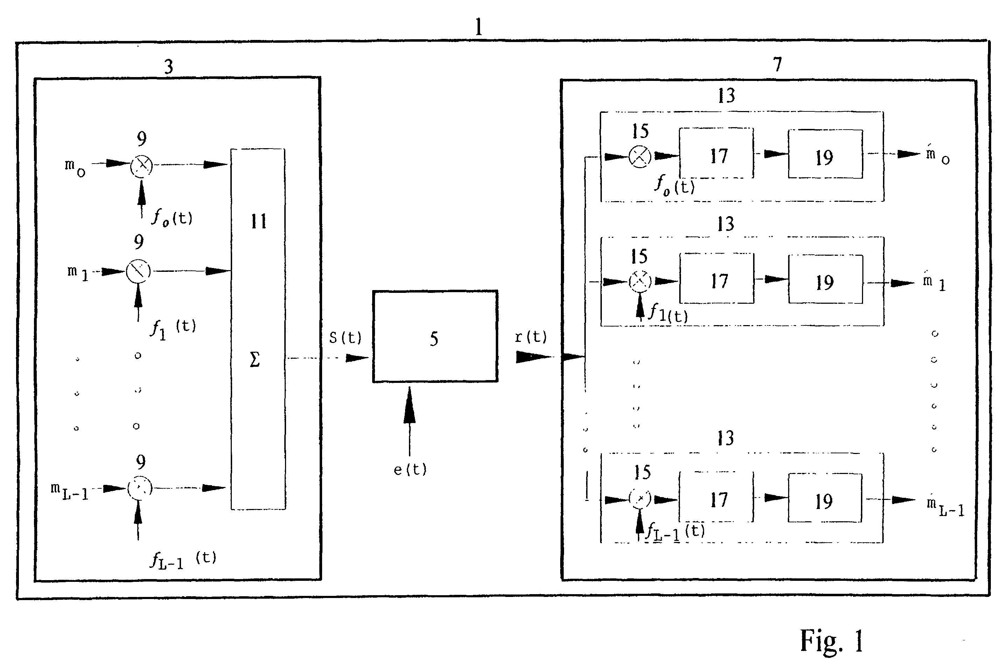

In Figur 1 ist eine Schaltungsanordnung gezeigt, die zur Übertragung und zum Empfang von Nachrichten geeignet ist. Sie umfaßt eine Sendeeinrichtung 3, die beispielsweise über einen Übertragungskanal 5 Signale an eine Empfangseinrichtung 7 übermittelt.

Die Sendeeinrichtung 3 umfaßt mehrere, im vorliegenden Ausführungsbeispiel eine Anzahl von L Multiplizierern 9, die die zu kodierende Nachricht $\underline{m}$ = ($m_0$,...,$m_{L-1}$) mittels orthogonaler Funktionen $f_0(t)$ bis $f_{L-1}(t)$ abbildet. Die Ausgangssignale der Multiplizierer 9 werden einer Addiereinrichtung 11 zugeführt, die das zu übertragende Signal s(t) erzeugt. Das Signal s(t) läßt sich somit als Linearkombination von orthogonalen Basisfunktionen wie folgt darstellen:

$$s(t) = m_0\, f_0(t) + m_1\, f_1(t) + .. + m_{L-1}\, f_{L-1}(t).$$

Bei den Funktionen $f_0(t)$ bis $f_{L-1}(t)$ handelt es sich um orthogonale Funktionen, die folgender Regel genügen:

$$\int_{-T/2}^{+T/2} f_i(t)\, f_j(t)\, dt = \begin{cases} const. & i = j \\ 0 & sonst \end{cases},$$

wobei T das Orthogonalitätsintervall ist. Da das Orthogonalitätsintervall der Hermiteschen Funktionen sich über ein unendliches Zeitintervall erstreckt, muß man die Hermiteschen Funktionen durch technisch realisierbare Funktionen approximieren.

Üblicherweise werden die Funktionen f(t) normiert, derart, daß die Konstante gleich 1 ist. Man spricht in diesem Fall auch von orthonormalen Funktionen.

In der Figur 1 ist angedeutet, daß das zu sendende Signal s(t) auf dem Übertragungsweg 5 gestört wird, wobei das Störsignal mit e(t) bezeichnet ist.

Die Empfangseinrichtung 7 umfaßt eine der Anzahl der im Signal s(t) enthaltenen Dimensionen entsprechende Anzahl an Dekodiereinheiten 13. Im vorliegenden Ausführungsbeispiel ist eine Anzahl von L Dekodiereinheiten 13 vorgesehen. Jede der Dekodiereinheiten 13 umfaßt einen Multiplizierer 15, einen Integrator 17 und einen Entscheider 19. Die vorgenannten Baueinheiten sind in Reihe geschaltet, wobei das Ausgangssignal des Multiplizierers 15 dem Integrator zugeführt ist und das Ausgangssignal des Integrators zum Entscheider 19 geführt ist, der dann die dekodierte Komponente $m_j$ bereitstellt.

Jeder der Dekodiereinheiten 13 wird ein Signal r(t) zugeführt, das sich aus dem gesendeten Signal s(t) und dem Störsignal e(t) zusammensetzt. Durch die Orthogonalität der zur Modulation verwendeten Funktionen lassen sich aus dem gesendeten Signal s(t) die Komponenten $m_j$ in einfacher Weise wiedergewinnen, indem man das Integral

$$\int_{-T/2}^{+T/2} s(t)\, f_j(t)\, dt$$

berechnet. Diese Integration wird von den Integratoren 17 durchgeführt. Da das von der Empfangseinrichtung 7 empfangene Signal r(t) einen Störanteil e(t) aufweist, enthält auch das von den Integratoren 17 zur Verfügung gestellte Signal gemäß Gleichung

$$\int_{-T/2}^{+T/2} r(t)\, f_j(t)\, dt$$

mit

$$r(t) = s(t) + e(t)$$

einen Störanteil. Der nachgeschaltete Entscheider 19 hat nun die Aufgabe, aus dem vom Integrator 17 gelieferten fehlerhaften Signal den bestmöglichen Schätzwert für die Nachricht $m_j$ zu bestimmen.

Neben der bereits erwähnten Eigenschaft der Orthogonalität zeichnen sich die zur Modulation benutzten

Funktionen $f_0(t)$ bis $f_{L-1}(t)$ dadurch aus, daß sie bei einer Fouriertransformation bis auf eine multipikative Konstante unverändert bleiben. Derartige Funktionen sind die Hermiteschen Funktionen und sind wie folgt definiert:

$$f_n(x) = \frac{H_n(x)e^{\frac{-x^2}{2}}}{\sqrt{2^n \, n!} \, \sqrt{\pi}}$$

wobei $H_n(x)$ die Hermiteschen Polynome sind, für welche gilt:

$$H_n(x) = (-1)^n e^{x^2} \frac{d^n}{dx^n} e^{-x^2}$$

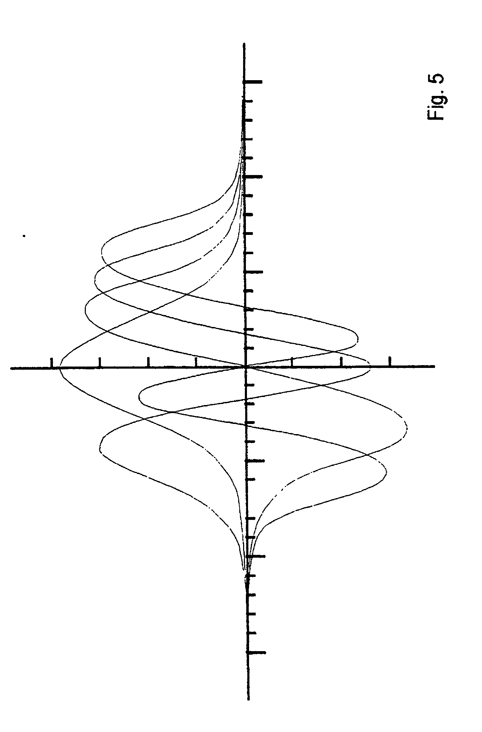

Eine graphische Darstellung der ersten fünf Hermiteschen Funktionen ist in Figur 5 gezeigt. Deutlich zu erkennen ist das starke exponentielle Abklingen der Funktionen. Diese Eigenschaft ermöglicht in einfacher Weise eine technisch realisierbare Approximation der Funktionen, die dann den Multiplizierern 9 und 15 zugeführt werden. Eine ausführliche Darstellung der erwähnten Hermiteschen Funktionen ist in dem Buch "The Fourier Integral and certain of its Applications", N. Wiener, Cambridge University Press, Cambridge 1933, Nachdruck 1988 zu finden.

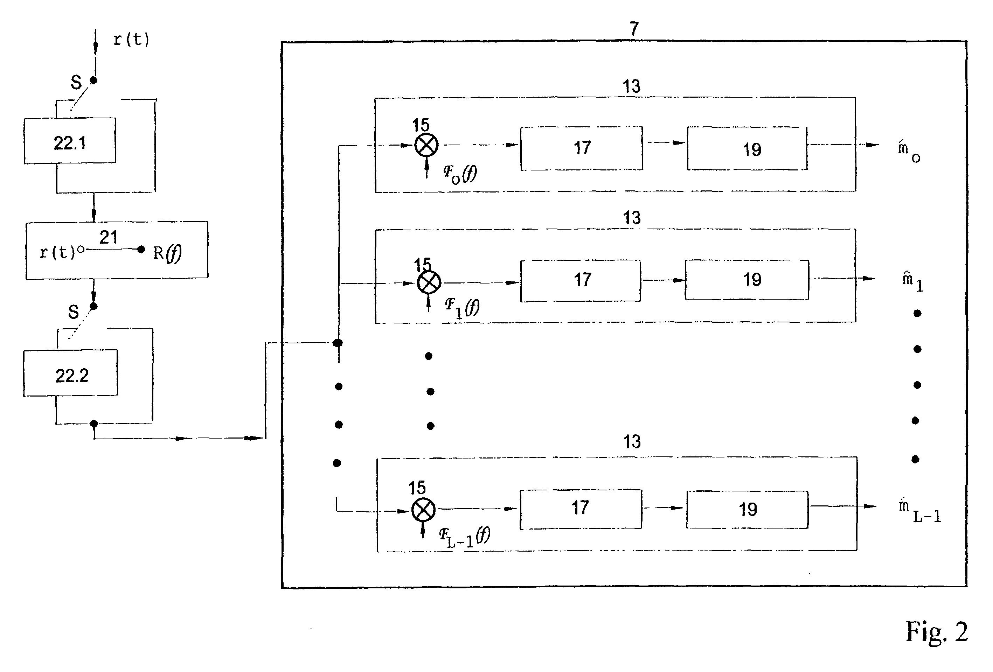

In Figur 2 ist ein zweites Ausführungsbeispiel einer Empfangseinrichtung 7 dargestellt, die im wesentlichen der in Figur 1 gezeigten und beschriebenen Empfangseinrichtung entspricht. Auf eine Beschreibung der mit gleichen Bezugszeichen gekennzeichneten Teile wird deshalb verzichtet. Im Unterschied zu der bereits beschriebenen Empfangseinrichtung 7 ist im vorliegenden Ausführungsbeispiel eine Fouriertransformationseinrichtung 21 vorgesehen, die das empfangene Signal r(t) in den Frequenzbereich transformiert und dieses transformierte Signal dann den Multiplizierern 15 zuführt. Der Fouriertransformationseinrichtung 21 ist ein erstes Filter 22.1 vorgeschaltet und ein zweites Filter 22.2 nachgeschaltet. Mit Hilfe der schematisch eingezeichneten Schalter S soll angedeutet werden, daß die beiden Filter 22.1, 22.2 wahlweise einsetzbar sind. Bei den beiden Filtern selbst handelt es sich vorzugsweise um Tiefpaß- oder Bandpaßfilter.

Dadurch, daß das die Nachricht enthaltene Signal s(t) im Basisband als Linearkombination von Hermiteschen Funktionen dargestellt ist, wird dieses Signal s(t) durch die Fouriertransformation der Fouriertransformationseinrichtung 21 im wesentlichen nicht verändert. Daraus ergibt sich, daß die Dekodiereinheiten 13 entsprechend den in Figur 1 angegebenen Dekodiereinheiten ausgebildet sein können. Die den Multiplizierern 15 zugeführten Funktionen $F_0(f)$ bis $F_{L-1}(f)$ unterscheiden sich von den in Figur 1 angegebenen Zeitfunktionen $f_0(t)$ bis $f_{L-1}(t)$ nur durch eine multiplikative Konstante, deren Wert gleich +/-1 oder +/-i ist, wobei i die Wurzel aus -1 darstellt, sofern die Fouriertransformation wie in dem Buch von Wiener definiert wird mit

$$F(f) = \frac{1}{\sqrt{2\pi}} \int_{-\infty}^{+\infty} f(t) \, e^{-ift} \, dt$$

Andere Definitionen der Fouriertransformation sind mutatis mutandis ebenfalls möglich. Die hier verwendete Definition ist in diesem Fall die mathematisch einfachste. Man beachte jedoch, daß das Symbol f sich um einen Faktor von der gängigen Frequenz unterscheidet.

Die im empfangenen Signal r(t) enthaltene Störung e(t) läßt sich durch das der Fouriertransformationseinrichtung 21 vorgeschaltete Filter 22.1 in gewissem Maße herausfiltern, wobei die Signalanteile der orthogonalen Hermiteschen Funktionen im wesentlichen unverändert bleiben. Zur weiteren Reduktion des Störanteils trägt das zweite Filter 22.2 bei, das der Fouriertransformationseinrichtung 21 nachgeschaltet ist und durch eine nochmalige Filterung weitere Störanteile eliminiert.

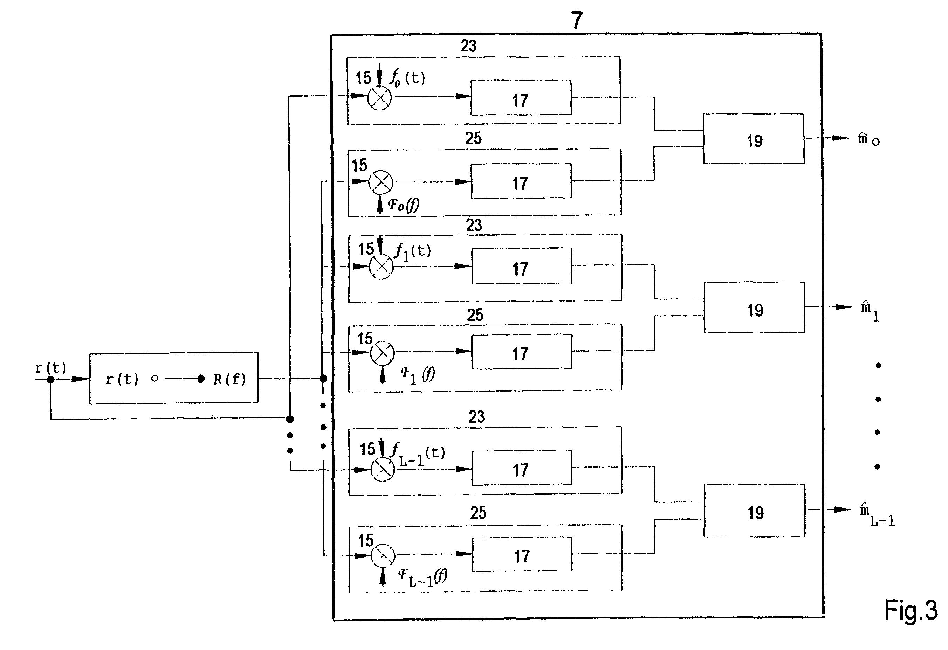

In Figur 3 ist ein weiteres Ausführungsbeispiel einer Empfangseinrichtung 7 dargestellt. Der Aufbau entspricht im wesentlichen demjenigen der Empfangseinrichtung gemäß Figur 2, so daß auf eine nochmalige Beschreibung der mit gleichen Bezugszeichen gekennzeichneten Teile verzichtet wird. Im Unterschied zu dem vorgenannten Ausführungsbeispiel sind jedem Entscheider 19 jeweils zwei Einheiten aus Multiplizierer 15 und Integrator 17 zugeordnet. Jeweils einer dieser Einheiten 23 wird das Signal r(t) direkt zugeführt, während die jeweils andere Einheit 25 das Ausgangssignal der Fouriertransformationseinrichtung 21 erhält. Somit liegt also eine Kombination der in Figur 1 und in Figur 2 gezeigten Empfangseinrichtungen 7 vor, wobei der Entscheider 19 die Aufgabe zu erfüllen hat, das Beste der beiden zugeführten Ausgangssignale der Integratoren 17 auszuwählen und als Komponenten $\hat{m}_j$ zur Verfügung zu stellen. Der Entscheider 19 ermittelt den besten Schätzwert aus den beiden zugeführten Signalen im Zeit- und im Frequenzbereich auf der Grundlage einer geeigneten Metrik, beispielsweise der euklidischen Metrik.

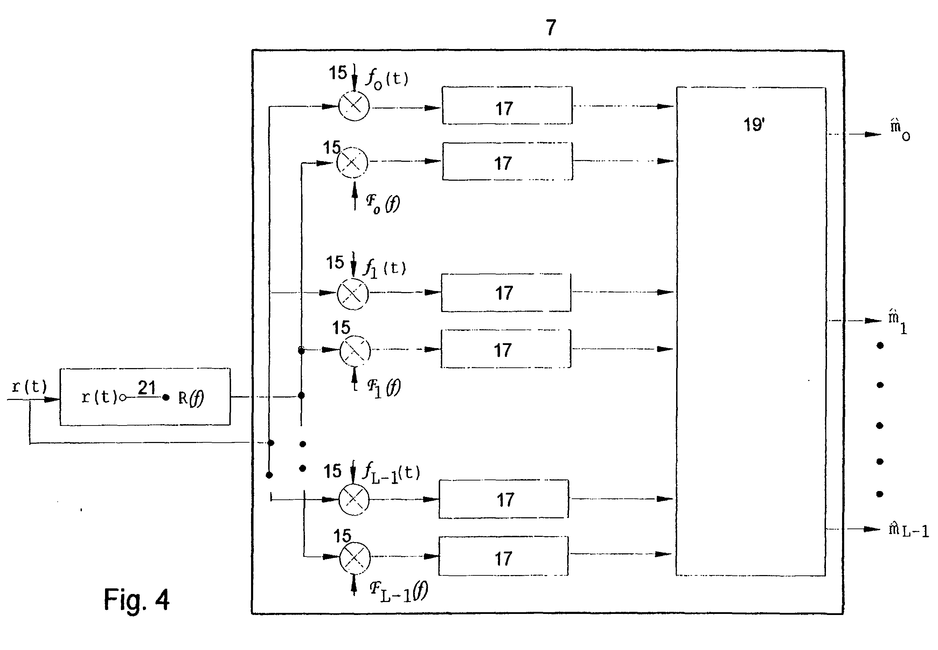

In Figur 4 ist ein weiteres Ausführungsbeispiel einer Empfangseinrichtung 7 dargestellt, die im wesentlichen dem Ausführungsbeispiel gemäß Figur 3 entspricht. Im Unterschied ist in der Empfangseinrichtung 7 gemäß Figur 4 ein Entscheider 19' vorgesehen, dem die Ausgangssignale aller Integratoren 17 zugeführt werden und der auf der Basis aller Signale die Komponenten $m_0$ bis $m_{L-1}$ nach einer geeigneten Metrik, beispielsweise wiederum der euklidischen Metrik, abschätzt und ausgibt. Diese Empfangseinrichtung ermöglicht, daß die aus dem gestörten Signal r(t) dekodierten Komponenten $m_0$ bis $m_{L-1}$ einen sehr geringen Störanteil besitzen.

Allen vorgenannten Ausführungsbeispielen ist gemein, daß durch die Verwendung Hermitescher Funktionen zur Codierung der Nachricht eine zusätzliche Filterung im Frequenzbereich erfolgen kann, da sich diese Hermiteschen Funktionen durch die Fouriertransformation im wesentlichen nicht verändern. Damit erzielt man eine Reduktion der Störungen in den dekodierten Nachrichten.

Selbstverständlich ist es möglich, einzelne Ausführungsbeispiele zu kombinieren; beispielsweise lassen sich die beiden in Figur 2 gezeigten Filter 22.1, 22.2 auch in den Ausführungsbeispielen gemäß Figur 3 und 4 einsetzen. Es ist darüber hinaus denkbar, daß das Signal s(t) in bekannter Weise durch Modulation in höhere Frequenzbereiche transformiert wird. Es ist desweiteren denkbar, das in Figur 3 gezeigte Ausführungsbeispiel derart abzuwandeln, daß statt jeweils zwei Einheiten 23 lediglich eine Einheit 23 vorgesehen ist, der dann über einen Multiplexer abwechselnd das im Zeitbereich und das im Frequenzbereich liegende Signal zugeführt wird.

## Patentansprüche

1. Verfahren zur Übertragung von Nachrichten, wobei die Nachrichten m=($m_0,m_1$, ....,$m_{L-1}$) mittels orthogonaler Funktionen zu einem Signal (s(t)) kodiert werden, wobei als orthogonale Funktionen Approximationen von Hermiteschen Funktionen verwendet werden, **dadurch gekennzeichnet, daß** das empfangene Signal (r(t)=s(t)+e(t)) einer Fouriertransformation unterzogen wird und anschließend mittels der orthogonalen Funktionen dekodiert wird, um die Nachrichten zu erhalten.

2. Verfahren nach Anspruch 2, **dadurch gekennzeichnet, daß** das empfangene Signal (r(t)) vor und/oder nach der Fouriertransformation gefiltert wird.

3. Verfahren nach Anspruch 2, **dadurch gekennzeichnet, daß** das Filtern ein Tiefpaßfiltern ist.

4. Verfahren nach einem der vorhergehenden Ansprüche, **dadurch gekennzeichnet, daß** das empfangene Signal (r(t)) sowohl im Zeit- als auch im Frequenzbereich dekodiert wird.

5. Verfahren nach Anspruch 4, **dadurch gekennzeichnet, daß** nach Erhalt der Ergebnisse der Dekodierungen eine Metrik auf die Ergebnisse angewandt wird, um eines der Ergebnisse auszuwählen.

6. Verfahren nach einem der vorhergehenden Ansprüche, **dadurch gekennzeichnet, daß** das Signal durch Modulation in höhere Frequenzbereiche transformiert wird.

7. Verfahren nach Anspruch 5, **dadurch gekennzeichnet, daß** als Metrik die euklidische Metrik verwendet wird.

8. Schaltungsanordnung zur Übertragung von Nachrichten, die so ausgestaltet ist, daß sie die Nachrichten m=($m_0$...$m_{L-1}$) mittels orthogonaler Funktionen zu einem Signal (s(t)) kodiert, mit einer sendeseitigen Codierungseinrichtung (3), die die Nachrichten (m) mittels approximierter Hermitescher Funktionen kodiert, und einer empfangsseitigen Demodulationseinrichtung (7), die so ausgestaltet ist, daß sie aus dem empfangenen Signal (r(t)) mittels der approximierten Hermiteschen Funktionen die Nachrichten zurückgewinnt, **dadurch gekennzeichnet, daß** die Demodulationseinrichtung eine Fouriertransformationsvorrichtung (21) umfaßt, die so ausgestaltet ist, daß sie das empfangene Signal (r(t)) vor seiner Dekodierung fouriertransformiert.

9. Schaltungsanordnung nach Anspruch 8, **dadurch gekennzeichnet, daß** die Demodulationseinrichtung (7) eine der Anzahl der Komponenten entsprechende Anzahl L von Multiplizierern (15), Integratoren (17) und Entscheidern (19) aufweist, wobei jeweils ein Modulator, ein Integrator und ein Entscheider zu einer Dekodiereinheit (13) in Reihe geschaltet sind.

**10.** Schaltungsanordnung nach Anspruch 8 oder 9, **dadurch gekennzeichnet, daß** jede Dekodiereinheit (13) zweifach vorgesehen ist, wobei jeweils eine Dekodiereinheit das Signal im Zeitbereich und die jeweils andere Dekodiereinheit das Signal im Frequenzbereich dekodiert.

## Claims

**1.** Process for the transmission of messages, the messages $m = (m_0, m_1, ...., m_{L-1})$ being coded into a signal $(s(t))$ by means of orthogonal functions, approximations of Hermitian functions being used as orthogonal functions, **characterized in that** the received signal $(r(t) = s(t) + e(t))$ is subjected to a Fourier transformation and is subsequently decoded by means of the orthogonal functions in order to obtain the messages.

**2.** Process according to claim 2, **characterized in that** the received signal $(r(t))$ is filtered before and/or after the Fourier transformation.

**3.** Process according to claim 2, **characterized in that** the filtering is low-pass filtering.

**4.** Process according to any one of the preceding claims, **characterized in that** the received signal $(r(t))$ is decoded both in the time range and also in the frequency range.

**5.** Process according to claim 4, **characterized in that**, after receipt of the results of decoding, a metric is applied to the results in order to select one of the results.

**6.** Process according to any one of the preceding claims, **characterized in that** the signal is transformed by modulation into higher frequency ranges.

**7.** Process according to claim 5, **characterized in that** the Euclidean metric is used as metric.

**8.** Circuit arrangement for the transmission of messages, said circuit arrangement being of such design that it codes the messages $m = (m_0...m_{L-1})$ into a signal $(s(t))$ by means of orthogonal functions, with a transmission-end coding apparatus (3) which codes the messages (m) by means of approximated Hermitian functions, and with a reception-end demodulation apparatus (7) which is of such design that it recovers the messages from the received signal $(r(t))$ by means of the approximated Hermitian functions, **characterized in that** the demodulation apparatus comprises a Fourier transformation device (21), said Fourier transformation device being of such design that it Fourier-transforms the received signal $(r(t))$ prior to its decoding.

**9.** Circuit arrangement according to claim 8, **characterized in that** the demodulation apparatus (7) comprises a number L of multipliers (15), integrators (17) and deciders (19) corresponding to the number of components, wherein one modulator, one integrator and one decider are connected in series to form a decoding unit (13).

**10.** Circuit arrangement according to claim 8 or 9, **characterized in that** each decoding unit (13) is provided double, wherein one decoding unit decodes the signal in the time range and the other decoding unit decodes the signal in the frequency range.

## Revendications

**1.** Procédé de transmission de messages, ceux-ci $(m = (m_0, m_1, ..., m_{L-1})$ étant codés grâce à des fonctions orthogonales pour former un signal $(s(t))$, des approximations de fonctions de Hermite étant utilisées en tant que fonctions orthogonales, **caractérisé en ce que** le signal reçu $(r(t) = s(t) + e(t))$ est soumis à une transformation de Fourier et qu'il est finalement décodé au moyen des fonctions orthogonales afin de recevoir les messages.

**2.** Procédé selon la revendication 2, **caractérisé en ce que** le signal reçu $(r(t))$ est filtré avant et/ou après la transformation de Fourier.

**3.** Procédé selon la revendication 2, **caractérisé en ce que** le filtrage est un filtrage passe-bas.

**4.** Procédé selon une des revendications précédentes, **caractérisé en ce que** le signal reçu $(r(t))$ est décodé aussi bien dans la gamme temporelle que dans la gamme de fréquence.

**5.** Procédé selon la revendication 4, **caractérisé en ce qu'**après la réception des résultats du décodage une métrique est appliquée aux résultats pour sélectionner un des résultats.

**6.** Procédé selon une des revendications précédentes, **caractérisé en ce que** le signal est transformé par modulation en plages de fréquences plus élevées.

**7.** Procédé selon une la revendication 5, **caractérisé en ce que** la métrique euclidienne est utilisée en tant que métrique.

**8.** Configuration de circuit utilisée pour transmettre des messages, conçue de manière à coder les messages $m = (m_0 \ldots m_{L-1})$ grâce à des fonctions orthogonales pour former un signal ($s(t)$), des fonctions de Hermite approchées par approximation étant utilisées en tant que fonctions orthogonales pour le coder, avec un dispositif de codage du côté d'émission (3), qui code les messages (m) au moyen de fonctions de Hermite approchées par approximation, et un dispositif de démodulation du côté réception (7), conçu de manière à ce que les messages soient récupérés au moyen des fonctions de Hermite approchées par approximation à partir du signal reçu ($r(t)$), **caractérisé en ce que** le dispositif de démodulation comprend un dispositif de transformation de Fourier (21) conçu de manière à transformer le signal reçu ($r(t)$) avant qu'il soit décodé selon la transformation de Fourier.

**9.** Configuration de circuit selon la revendication 8, **caractérisée en ce que** le dispositif de démodulation (7) possède un nombre L de multiplicateurs (15), d'intégrateurs (17) et de décideurs (19) correspondant au nombre des composants, un modulateur, un intégrateur et un décideur étant commuté en série en une unité de décodage (13).

**10.** Configuration de circuit selon la revendication 8 ou 9, **caractérisée en ce que** chaque unité de décodage (13) est prévue en double, l'une décodant le signal dans la plage temps et l'autre décodant le signal dans la gamme de fréquence.

Fig. 1

Fig. 2

9

Fig.3

Fig. 4

EP 1 018 221 B1

Fig. 5